# EUROPEAN PATENT APPLICATION

(11) **EP 4 810 940 A1**
(43) Date of publication of application: **23.09.2026**
(21) Application number: 26166925.3
(22) Date of filing: 23.03.2026
(51) Int. Cl.: G01N 15/1404, G01N 15/1429, B01L 3/00, G01N 15/14, G01N 15/10

(54) **METHOD AND SYSTEM FOR DETERMINING THE VIABILITY OF BIOLOGICAL PARTICLES**

(30) Priority: 21.03.2025 IT 202500005856
(71) Applicant: Università degli Studi di Catania, 95131 Catania (IT)
(72) Inventor: Bucolo, Maide Angela Rita, 95131 Catania (IT); Guarino, Francesca, 95131 Catania (IT); Cutuli, Emanuela, 95131 Catania (IT)
(74) Representative: Mola, Edoardo

(57) **Abstract**

Method for determining a degree of vitality of first biological particles comprising a procedure of subjecting (Step 2) a first dilution of said first biological particles to a periodic hydrodynamic stimulus and of comparing a relative temporal trend of a first signal representative of a velocity of the biological particles in response to the hydrodynamic stimulus with a second reference trend representative of a reference velocity signal and of calculating (Step 4) a vitality value of the biological particles as a function of a deviation value (Step3) of the trend of the first signal with respect to the trend of the second signal.

## Description

### Field of the invention

The present invention relates to the field of "Label-free" methods and systems for determining the vitality of biological particles.

### State of the art

"Label-free" (LF) detection is an analysis that uses biosensors based on optical acquisition to convert the response of a biological sample into a signal without using chemical markers, such as for example fluorescent or magnetic labels.

This approach makes it possible to monitor in real time the changes occurring in a cell without the use of markers.

Moreover, LF technology eliminates the risk of unwanted background signals that may arise when labels bind non-specifically to other components of the biotest. This is particularly useful when working with complex or non-purified sample material that contains numerous components in addition to the analyte of interest.

Current techniques require a long time and require complex procedures for the preparation of cells or are based on expensive equipment.

Scientific research is constantly seeking new LF techniques to characterise the analyte.

One of the characteristics of greatest interest is the vitality of biological cells because it makes it possible to determine the impact of certain test substances on them. Unless specifically excluded in the detailed description that follows, what is described in this chapter is to be considered as an integral part of the detailed description.

### Summary of the invention

The object of the present invention is to present a Label-free technique for determining the vitality of biological cells that is easy to implement.

The basic idea of the present invention is to subject a dilution of biological particles to a periodic hydrodynamic stimulus inside at least one optically transparent micro-channel. By means of an optical system comprising a light source to illuminate the micro-channel and an optical sensor, the dilution is observed to detect a distribution of the velocity of movement of the cells inside the micro-channel under the effect of the periodic hydrodynamic stimulus.

It is found that the more vital the cells are, the lower the velocity recorded in the dilution.

In other words, the vitality of the target cells affects the fluid-dynamic resistance (drag force) generated by the fluid on the cells themselves. Therefore, the velocity signal deviates from a reference signal proportionally to a vitality value of the biological cells analysed.

The analysis can be performed both in the time domain and in the frequency domain, since the vitality of the target cells proportionally leads to a spectral dispersion of the velocity signal.

The dependent claims describe preferred variants of the invention, forming an integral part of the present description.

### Brief description of the figures

Further objects and advantages of the present invention will become clear from the detailed description that follows of an embodiment thereof (and of its variants) and from the attached drawings given purely by way of example and not of limitation, in which:
Figure 1 shows a flow chart representative of the method for determining the vitality of biological particles contained in a dilution, object of the present invention;
Figures 2a and 2b show respectively time diagrams of velocity and frequency decomposition diagrams of the velocity measured in a micro-channel filled with different dilutions that show a behaviour dependent on the vitality of the biological particles contained in the dilutions;
Figures 3a and 3b show diagrams relating respectively to the measured velocity amplitude and the peak at the fundamental frequency of the measured velocity spectrum for different values of amplitude of the hydrodynamic stimulus;
Figures 4a and 4b schematically show a system for determining the vitality of biological particles contained in a dilution, according to the present invention.

The same reference numbers and letters in the figures identify the same elements or components or functions.

It should also be noted that the terms "first", "second", "third", "upper", "lower" and the like may be used herein to distinguish various elements. These terms do not imply a spatial, sequential, or hierarchical order for the modified elements unless specifically indicated or inferable from the text.

The elements and features illustrated in the different preferred embodiments, including the drawings, may be combined with each other without however departing from the scope of protection of the present application as described below.

### Detailed description of embodiments

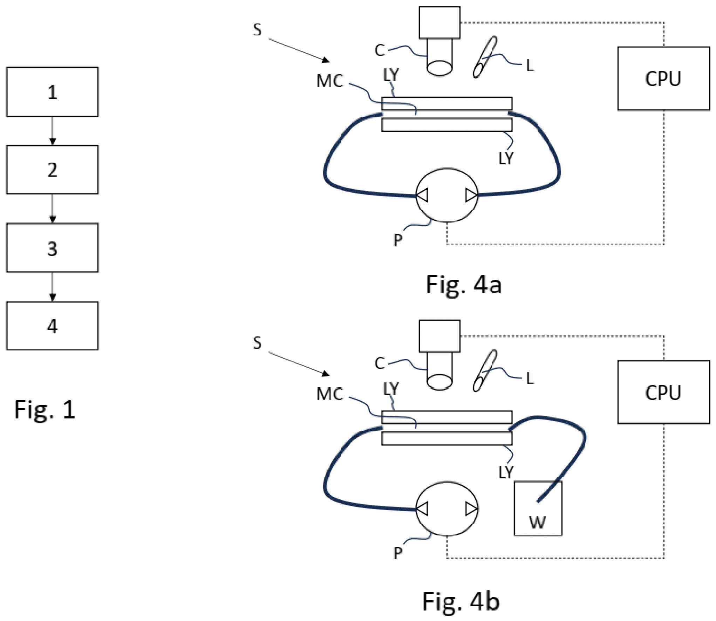

Figure 1 shows a flow chart representative of the present invention.

At step 1, a first dilution containing biological particles is introduced into a micro-channel made of transparent material, for example glass, or polycarbonate etc.

At step 2, a periodic hydrodynamic stimulus is applied to the dilution and at the same time a first signal of a measurement of the velocity of the particles inside the micro-channel MC over time is acquired, for example by means of an optical detection device C, such as a camera or photodiodes, and where the velocity is evaluated along the locally prevailing direction of the motion induced by the hydrodynamic stimulus.

At step 3, a deviation of the time trend of the first measurement signal with respect to the time trend of a reference measurement signal is calculated.

At step 4, a vitality value of the biological cells is returned as a function of said deviation.

Preferably, the stimulus is periodic and more preferably sinusoidal.

The reference signal is for example obtained by carrying out the same steps 1-3 for a second dilution of biological cells of the same nature, having a confirmed vitality.

The confirmation of vitality, carried out only once for each strain of biological material, can be performed by means of more expensive techniques which are divided into label-free and non-label-free methods. Label-free techniques do not require markers and include, for example, absorbance measurement, electrical impedance (ECIS), surface plasmon resonance (SPR) and phase contrast microscopy. Non-label-free techniques, on the other hand, use dyes or reagents to measure cell vitality, such as for example flow cytometry, the MTT/XTT/MTS test, based on metabolic activity, or through the use of trypan blue, which distinguishes live and dead cells based on membrane integrity.

The observation time interval may be limited to a few tens of seconds, for example 20 seconds would be sufficient, but also longer. This, however, depends on the frequency of the hydrodynamic stimulus.

Preferably, at step 2, the first velocity measurement signal and the reference signal are normalised with respect to a respective number of particles.

The deviation described above may be expressed in terms of peak-to-peak amplitude value of the velocity and/or in terms of amplitude value of the fundamental frequency into which the first measurement signal is decomposed into the respective harmonics.

A system S for analysing and determining the vitality of biological particles therefore comprises an optically transparent micro-channel MC, for example defined by a pair of flat plates LY parallel to each other and defining a gap having a width between 20 µm and 2 mm.

The micro-channel MC is operatively connected with a hydraulic pump P capable of imparting to the dilution contained in the micro-channel a periodic oscillatory motion.

In Figure 4 it can be seen that the pump is connected to the micro-channel at two opposite points, in order to impart the oscillatory hydrodynamic stimulus according to mutually opposite directions. The connection of the pump P may occur either at two opposite points, see Figure 4a, or at only one point of the micro-channel MC with a vent point at the end of the micro-channel MC connected to a tank W, see Figure 4b.

As can be seen in Figures 4a and 4b, the micro-channel is provided with a single inlet and a single outlet and a single stimulation source is provided. Advantageously, this configuration makes it possible to realise a single controlled stimulation of the dilution, avoiding interference due to multiple stimulations or flows coming from distinct inlets.

The micro-channel may be supported in any manner since it is not resonant.

In fact, so-called Suspended Microchannel Resonators (SMR) are known which have resonance frequencies of the order of 100 kHz - 2 MHz, that is to say frequencies that are very far from those mentioned later in the present application. Indeed, later reference is made to a frequency of the single stimulus, i.e. the hydrodynamic stimulus, which is of the order of 1 Hz or even of the order of tenths of Hz.

Therefore, no deformation region is present, since the present method does not provide for causing any deformation in the particles, but only for measuring their motion in response to the hydrodynamic stimulus.

Moreover, as described above, the vitality measurement is carried out by measuring exclusively the motion of the particles subjected to the present method, therefore only one type of sensor device is provided and it coincides with the image or signal acquisition device (C).

The pump is configured to generate a hydrodynamic stimulus having an amplitude between 0.0001 µl/min and 10 ml/min and preferably between 1 µl/min and 1 ml/min.

It is appropriate to ensure that the hydrodynamic stimulus induces, in the observation area, a velocity component predominantly along the local main direction of the flow inside the micro-channel.

On the other hand, it is appropriate to ensure that the hydrodynamic stimulus leads to having a velocity component essentially along the direction connecting the two points of connection with the pump or the connection between the pump and the tank and that this direction is parallel to the plates LY defining the micro-channel.

A light source L is used to illuminate the micro-channel, for example consisting of a ring of LED lights arranged around the objective of a camera.

The camera preferably operates at a frame-rate between 20 and 120 fps (frames per second).

A processing unit is associated with the camera and comprises a software module capable of acquiring in an observation area and of calculating a displacement velocity of corpuscular objects represented in the observation area. Preferably, the software module is also capable of calculating an average number of particles inside the observation area so as to perform a normalisation of the calculated velocity as a function of the number of particles present in the observation area.

It is worth pointing out that the measurement of the oscillatory motion of the particles, alternatively to the camera, can be implemented with a photodiode system.

### Experimental results

The present technique was applied to eukaryotic yeast cells of Saccharomyces cerevisiae having a diameter of 5 [µm] and to silica spheres having a diameter of 6 [µm]. The yeast cells were examined in two different health conditions. In particular, vital cells were compared with cells subjected to death stimuli using hydrogen peroxide (H₂O₂). Hydrogen peroxide is a commonly used apoptosis inducer for different types of cells, capable of inducing cell death before morphological changes can be detected by conventional means. Silica spheres were used as a reference of non-vitality.

The vital yeast cells were tested prior to the experimental campaign using a standard approach by measuring absorbance at 660 [nm] using a spectrophotometer. An OD₆₀₀, i.e. the optical density measured at a wavelength of 660 [nm], equal to 0.1, corresponding to about 1 × 10⁶ cells per ml, is generally reached in optimal conditions of vitality of yeast cells.

Moreover, the cells were observed under an optical microscope and the morphological parameters relating to appearance and cellular integrity were confirmed.

The yeast cells, both vital and stimulated to apoptosis, were diluted in a phosphate buffered saline dilution (PBS) in order to obtain a concentration of 10⁸ microparticles per 10 [ml] of fluid. Hereinafter referred to as "dilution". The inert silica spheres were diluted in a dilution of water and glycerol with a mixing ratio of 20:80, resulting in a concentration of 10⁷ microparticles per 10 [ml]. This dilution and concentration were chosen to prevent the spheres from settling on the bottom of the micro-channel and to ensure their buoyancy due to the density difference with respect to water or PBS.

The solutions were introduced alternately into the micro-channel using oscillating flows at a fixed fundamental frequency fᵢ = 0.1 [Hz] and at five different amplitude values A ∈ {0.05, 0.07, 0.1, 0.15, 0.2} [ml/min], without inducing deformation of the microparticles.

A schematic summary of the preliminary experiments carried out is shown in Table1.

| **Table 1** | Amplitude of the stimulus [ml/min] |
|---|---|
| Microparticles | |
| Living yeast cells | 0,05; 0,07; 0,1; 0,15; 0,2 |
| Yeast cells treated with H₂O₂ | 0,05; 0,07; 0,1; 0,15; 0,2 |
| Silica spheres | 0,05; 0,07; 0,1; 0,15; 0,2 |

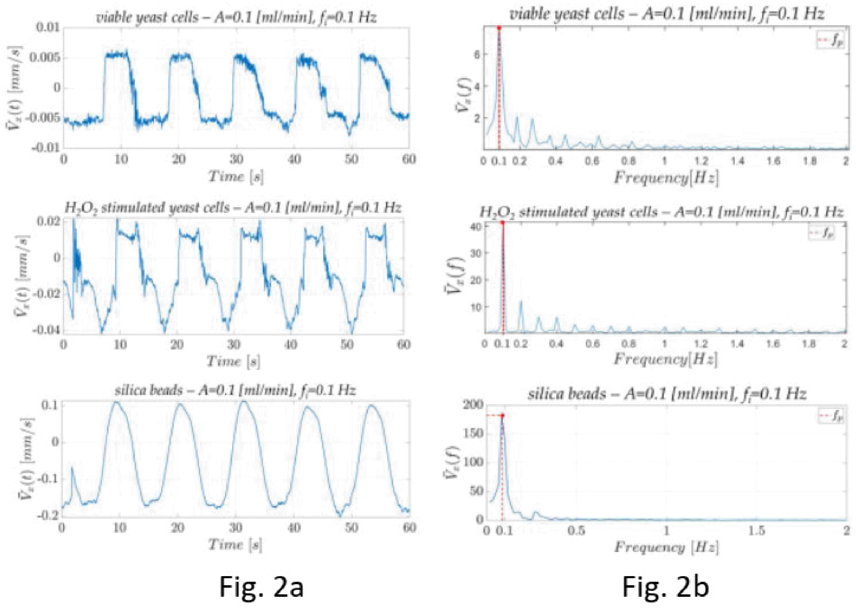

In Figures 2a the corresponding velocity signals are shown and in Figures2b the corresponding spectra, respectively, with the same order indicated in Table1, vital yeast cells, yeast cells stimulated with H₂O₂ and silica spheres, in the experimental condition A = 0.1 [ml/min].

For convenience, the graphs corresponding to the other amplitude values are omitted since they are equivalent to those shown for A = 0.1 [ml/min].

From comparison of the graphs of Figure 2a it can be noted that there is an approximately sinusoidal trend at the fundamental frequency similarly to the imparted hydrodynamic stimulus.

Only for the dilution containing silica spheres, furthermore, the amplitude of the acquired signal is substantially unchanged with respect to the stimulus. In other words, the test dilution, represented by the dilution of silica spheres, reproduces a velocity trend superimposable to the stimulus in terms of temporal trend and substantially unchanged amplitude, as observed by looking at the third graph of Figure2a.

Conversely, by observing the first graph of Figures2a, the greater attenuation of the stimulus can be noted, since the maximum recorded velocity is of the order of 0.005mm/s.

It can therefore be concluded that the vitality of the cells leads to an attenuation of about 50% of the velocity signal recorded in the micro-channel.

Since the stimulus is periodic and the recorded response is periodic at a fundamental frequency induced by the stimulus, the signals can be processed in a similar manner both in the time domain and in the frequency domain to detect cellular vitality by quantifying the signal intensity. In the time domain the signal intensity is calculated by considering the peak-to-peak excursion of the signal. In the frequency domain, the signal intensity is calculated from the signal spectrum, considering the value of the peak at the hydrodynamic actuation frequency fᵢ = 0.1 [Hz].

It is therefore expected that both parameters are correlated with cellular vitality which represents the hydrodynamic resistance of the microparticles to the stimuli (the hydrodynamic actuation), a lower maximum velocity value reached in the time domain and a lower frequency peak in the spectrum compared to their non-healthy counterparts.

In other words, the acquired velocity signal has a fundamental frequency component coinciding or substantially coinciding with the fundamental frequency of the input hydrodynamic stimulus.

Figures 2b show the corresponding graphs in which the analysis is carried out in spectral terms.

It can be noted that the first graph shows a much more accentuated spectral dispersion compared to the last graph. Therefore, the technique presented herein proves to be effective. As further confirmation that the spectral distribution is correlated to the vitality of the cells, it can be noted that the amplitude of the velocity trends along the direction of the stimulus "x" for vital yeast cells is lower (max V⁻ₓ(t) = 0.005 [mm/s]) than that obtained for yeast cells pre-treated with H₂O₂ (maxV⁻ₓ (t) = 0.02 [mm/s]) and diluted in an identical manner to the vital ones.

The subscript "x" specifically indicates the local principal direction of motion within the micro-channel.

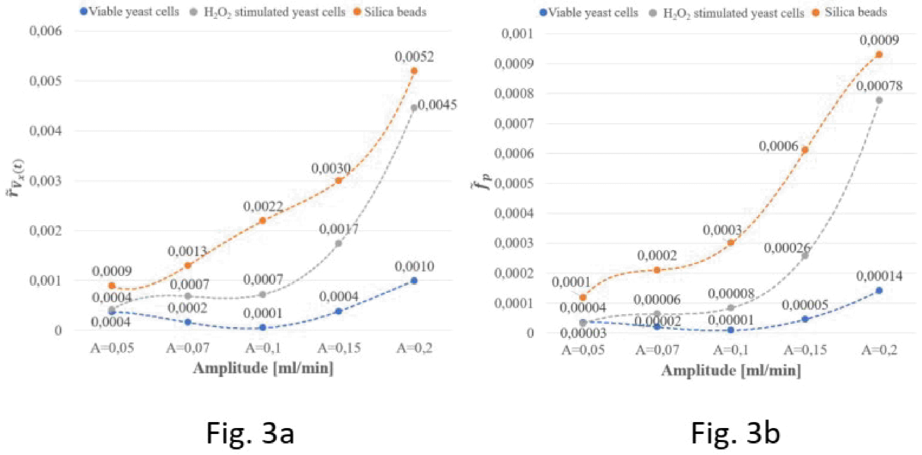

The graphs of Figures3a and 3b show in a summary manner the comparison of these behaviours identified in the entire experimental campaign for all values of A indicated in Table 1.

To eliminate the influence of the number of microparticles on the results, within the observation area framed by the optical device, the velocity trends were normalised with respect to the respective average number of particles.

Figures 3a and 3b show the values of the peak-to-peak velocity excursion ṽV⁻ₓ(t) and of the amplitude of the peak at the fundamental frequency ṽ_fₚ downstream of the aforesaid normalisation.

The curves that best connect the obtained points are fourth-degree polynomial curves with R² = 0.9999.

The three curves of Figure 3a represent the trend of the peak-to-peak velocity excursion respectively of vital yeast cells, yeast cells stimulated with H₂O₂ and silica spheres. The three curves of Figure 3b represent the trend of the amplitude of the peak at the fundamental frequency respectively of vital yeast cells, yeast cells stimulated with H₂O₂ and silica spheres. Each point of the curves is correlated to the amplitude of the force of the external oscillating input flow A.

As a main result, it can be observed that for all experimental conditions and for both considered parameters: the curve of yeast cells stimulated with H₂O₂ (grey curve) is always located between that relating to vital yeast cells (blue curve) and the curve of silica beads (orange curve) both in the time domain and in the frequency domain.

Once again it can be noted that the frequency analysis shown in Figure 3b is consistent with the result obtained with

Figure2b. This result confirms that yeast cells vary their behaviour according to their health conditions assuming characteristics more typical of silica spheres when they are exposed to death stimuli.

Further tests were carried out instead varying the stimulus frequency up to 3Hz and it was noted that, although it is still possible to adequately distinguish between the ideal behaviour represented by silica spheres, the behaviour of pre-treated cells and the behaviour of vital cells.

When photodiodes are used instead of a camera it is possible to use much higher stimulus frequencies up to reaching kHz, for example 1kHz.

Therefore, in general, the present method can be carried out with hydrodynamic stimuli having a frequency between 0.001 Hz and 1kHz.

Preferably, the stimulus has a frequency between 0.01Hz and 1Hz when the optical device is a camera.

The present invention finds particular application in the field of drug research and development. Indeed, pharmaceutical companies use cell vitality tests to evaluate the toxicity of new drugs and compounds, identify potential side effects and optimise drug formulations. The demand for new and effective drugs for various diseases, combined with increasing regulatory requirements for safety and efficacy, drives the growth of this market.

The present invention also finds application in in vitro diagnostics (IVD). This practice refers to the testing of biological samples outside the body. Cell vitality tests are used in a variety of IVD applications, such as in clinical diagnostics to diagnose diseases, monitor treatment progress and evaluate patient prognosis and in Point-of-care tests to provide rapid and accurate diagnostic results at the point of care, such as in medical practices and hospitals.

The present invention finds application:
in verifying the response of tumour cells to specific treatments;
in the field of immunology to evaluate the function of immune cells and their response to antigens;
in the field of stem cells to evaluate vitality and differentiation of stem cells;
in the field of toxicology to evaluate the toxicity of environmental pollutants and chemical substances on cells.

The present invention can advantageously be implemented, also by means of a computer program comprising coding means for performing one or more steps of the method, when this program is executed on a computer. Therefore it is intended that the scope of protection extends to said computer program and also to computer-readable means comprising a recorded message, said computer-readable means comprising program coding means for performing one or more steps of the method, when said program is executed on a computer.

From the above description, the person skilled in the art is able to realise the object of the invention without introducing further constructive details.

## Claims

1. Method for determining a label-free degree of vitality of a first group of biological particles comprising a procedure of subjecting (Step2) a first dilution of said first biological particles to a periodic hydrodynamic stimulus and of comparing a relative temporal trend of a first signal representative of a velocity of the first group of biological particles moving with periodic motion in response to the periodic hydrodynamic stimulus, with a second reference trend representative of a reference velocity signal, and of calculating (Step4) a vitality value of the first group of biological particles as a function of a deviation value (Step3) of the trend of the first signal with respect to the trend of the second signal.

2. Method according to claim1, wherein said deviation value is defined as a difference between a first average value of peak intensity of the first signal and a second average value of peak intensity of the second signal.

3. Method according to claim1, wherein said deviation value is defined as a difference between a first value of an intensity of a fundamental frequency of a harmonic decomposition of the first signal, and a second value of an intensity of a fundamental frequency of a harmonic decomposition of the second signal.

4. Method according to any one of the preceding claims, wherein the periodic hydrodynamic stimulus is sinusoidal.

5. Method according to any one of the preceding claims, wherein the hydrodynamic stimulus has a temporal duration of at least 0.5 seconds and wherein the first signal representative of the velocity of the first group of biological particles is measured during the stimulus.

6. Method according to any one of the preceding claims, wherein the second signal is realised on the basis of a dilution containing a second group of biological particles having the same nature as the first group of biological particles and having confirmed vitality.

7. Method according to any one of the preceding claims, wherein said first and second signal are previously normalised with respect to a respective number of particles.

8. Method according to any one of the preceding claims, wherein
- said hydrodynamic stimulus has a frequency comprised between 0.001Hz and 1 kHz, preferably between 0.01Hz and 1Hz and/or
- said hydrodynamic stimulus has an amplitude comprised between 0.0001µl/min and 10ml/min and preferably between 1µl/min and 1ml/min.

9. Method according to any one of the preceding claims, wherein the micro-channel is configured in such a way that the periodic hydrodynamic stimulus induces, in the observation area, a field of motion locally dominated by a main component along the local direction of the channel.

10. Method according to any one of the preceding claims 1-9, wherein said hydrodynamic stimulus is realised by means of a pump connected
+ at a first and a second end, opposite to the first end, of the micro-channel,
+ only at a first end of the micro-channel and an outlet conduit is connected at a second end of the micro-channel, opposite to the first end.

11. Method according to any one of the preceding claims, wherein said first signal has a fundamental frequency coinciding or substantially coinciding with the fundamental frequency of the stimulus.

12. System (S) for label-free determination of a degree of vitality of first biological particles comprising
- a micro-channel (MC), operatively connected with
- a hydraulic pump (P), such that the pump is able to impart a periodic hydrodynamic stimulus to a dilution contained in the micro-channel,
- an optical device (C) for acquisition of images or signals of an observation area of the micro-channel,
- a processing unit (CPU) operatively connected with the optical device so as to carry out measurements of velocity of said first biological particles in the micro-channel, and operatively configured to allow the system to perform all the steps of claim1.

13. System according to claim12, wherein said hydraulic pump (P) represents the only actuator of the system.

14. System according to claim12 or 13, wherein the pump (P) is connected at a first and a second end, opposite to the first end, of the micro-channel, only at a first end of the micro-channel and an outlet conduit is connected at a second end of the micro-channel, opposite to the first end.

15. System according to any one of claims12-14, wherein the signal acquisition device is a detection device configured to generate a signal representative of the velocity or of the displacement of the particles in response to the hydrodynamic stimulus.
